# EUROPEAN PATENT SPECIFICATION

(11) **EP 2 285 226 B1**
(45) Date of publication and mention of the grant of the patent: **23.07.2014**
(21) Application number: 08748796.3
(22) Date of filing: 16.05.2008
(51) Int. Cl.: A22B 5/00, A22B 5/08, A22B 5/10, B08B 3/02

(54) **Carcass cleaning device**
Schlachtkörperreinigungsvorrichtung
Dispositif de nettoyage de carcasse

(43) Date of publication of application: 23.02.2011
(73) Proprietor: Teknologisk Institut, 2630 Taastrup (DK)
(72) Inventor: CHRISTENSEN, Hardy, DK-4330 Hvalso (DK); HANSEN, Niels, Worsoe, DK-4320 Lejre (DK); HENRIKSEN, Ole, DK-4000 Roskilde (DK)
(74) Representative: Nielsen, Kim Garsdal
(86) International application number: PCT/DK2008/000185
(87) International publication number: WO 2009/138083

(56) References cited:
- EP-A1- 0 679 335
- EP-A1- 0 679 335
- WO-A1-02/26045
- WO-A1-02/26045
- WO-A1-03/026432
- GB-A- 2 398 617
- US-A- 5 632 670

## Description

The present invention relates to a cleaning device for cleaning the surface of a carcass by contact, the cleaning device comprising a plurality of steam discharge jets and a suction nozzle. Further, the invention relates to a combined nozzle arrangement.

The carcass in question is in particular a carcass of a slaughtered animal to be cleaned during processing in a slaughterhouse, or similar.

In order to increase food safety, there is an increasing focus on minimising the risk of contamination of meat by e.g. bacteria. In recent years, a lot of effort and expenditure has been invested in reducing contamination of meat at slaughter-houses. Also, decontaminating or cleaning carcasses with steam to reduce visible contamination (e.g. dung) and non-visible contamination (e.g. bacteria) is being used to an increasing extent.

State of the art for carcass cleaning and decontaminating includes the suction head described in WO 03/026432. This suction head resembles a common hand shower, and the head comprises steam ducts arranged around a central suction air duct. The suction head is swept by hand over the surface to be cleaned, in contact with the surface. The suction head facilitates cleaning of carcasses for visible contamination, as it is easy to use for the operator, and the effect of the cleaning is impressive. Although this suction head represents a major progress, the cleaning process is relatively expensive, as it relies on manual operation of the suction head. Further, as it is a manual process, there is a risk that the operator will miss certain areas of the carcass or overlook contamination, and it is entirely left to the operator to decide which area of carcass surface to clean and indeed to sweep the suction head over the whole of this area. Contamination may also be invisible to the human eye.

From WO 02/26045 a cleaning device for cleaning a surface of a carcass by contact comprising a plurality of steam discharge jets and a plurality of suction nozzles being adapted to following an uneven surface of the carcass is known.

From EP 0679335 a combined nozzle arrangement comprising one steam discharge jet and one suction nozzle being adapted to deflect resiliently when subjected to a force in a direction substantially transversely to the direction of the suction nozzle is known.

The object of the invention is to provide a cleaning device for cleaning a surface of a carcass by contact with less manual operation and with no or less need for assessing or judging the type, degree and/or extension of contamination prior to cleaning.

To meet this object, the cleaning device according to the invention comprises a plurality of steam discharge jets for discharging steam onto the surface of the carcass and a plurality of suction nozzles for drawing in impurities, steam and condensate from the surface, whereby the suction nozzles are adapted to following an uneven surface of the carcass.

Hereby corresponding advantages are obtained as stated with respect to the method of the invention.

As the cleaning device comprises a plurality of steam discharge jets and a plurality of suction nozzles, the size of the cleaning device - that is, the area of carcass surface covered by the device at any one time - may easily be adapted to the desired cleaning process by varying the number of steam discharge jets and suction nozzles.

A particular advantage is that the invention facilitates automation of the procedure of cleaning, in particular because an automated cleaning device will not need to comprise features enabling assessment of the nature or the spatial extent of the contamination.

The suction nozzles and/or steam discharge jets are adapted for following the surface of the carcass in various ways, and to deflect resiliently when pressed against or swept over the carcass surface.

By this measure, the suction nozzles will automatically adapt to an uneven carcass surface. This is important, as practically the entire surface of a carcass is more or less uneven. Very few surface parts of a carcass indeed may be satisfactorily approximated by surfaces which are regular in a mathematical sense.

When the cleaning device is pressed against or swept over a carcass surface, the suction nozzles opposite protruding parts of the carcass surface will deflect more than suction nozzles opposite retracted or hollow parts of the surface, and this will enable that the cleaning device may be pressed further against the carcass, until the suction nozzles opposite retracted or hollow parts of the surface will actually contact these parts of the surface.

It is hereby achieved that all suction nozzles may come into proper contact with the carcass surface just by pressing the device against the carcass surface or sweeping it along the surface while maintaining surface contact, thus enabling thorough cleaning of the whole surface without the need for guiding the cleaning device along the carcass surface in a precise or delicate manner.

The suction nozzles comprise additional openings or cut-outs for entry of ambient air arranged at or near a mouth of each suction nozzle.

In general, when the mouth of a nozzle is pressed against a surface, the nozzle may become choked or blocked, so that no air will enter the nozzle even if ample suction is provided. When the nozzle is choked this way, the air stream into the nozzle may become so weak that it has not the required force or capacity to carry impurities away from the surface in an efficient manner.

When openings or cut-outs are provided, ambient air will be drawn in, providing for a sufficient air flow to carry impurities away from the carcass surface, even if the suction nozzle is abutting the carcass surface along its entire circumference.

At least a carcass-contacting mouth portion of each suction nozzle is preferably made from a flexible material, preferably silicone rubber.

When the suction nozzles, or at least a mouth portion thereof, are made from a flexible material, they will become able to adapting to an uneven surface, such as the surface of a carcass to be cleaned, by deflecting or deforming. Hereby it is attained that all suction nozzles may touch the carcass surface at any one time, thus providing for efficient cleaning. If the suction nozzles do not have suitable flexibility, nozzles touching protruding parts of the carcass surface may lift the cleaning device so high that other nozzles are indeed lifted from retracted portions of the surface. In this case, the latter nozzles may not clean the corresponding parts of the surface in an efficient manner.

Silicone rubber or silicone-based materials are found to provide excellent results for this purpose as they are relatively cheap, very suitable for use with foodstuffs, and highly flexible.

According to the invention it is preferred that a number of steam discharge jets and suction nozzles are integrated into a combined nozzle arrangement.

Supply of steam onto the carcass surface is important, as the steam will at the same time loosen impurities and dissolve or disperse them into the steam flow and, by its very temperature, kill bacteria and micro-organisms.

By providing steam discharge jets in the immediate vicinity of the suction nozzles when these are incorporated into a common or combined nozzle arrangement, an ample and efficient supply of steam is provided, and the steam is applied to the carcass surface where it is needed, that is, near each suction nozzle.

In a preferred embodiment, the cleaning device has a plurality of such combined nozzle arrangements.

Hereby, the cleaning device may be adapted to cover a desired area of carcass surface, and cleaning devices having different area coverage and indeed different shapes may be manufactured for different cleaning purposes. For instance, a hand-held cleaning head may be made, covering a small area; an elongated cleaning head for a cleaning machine may be made for sweeping along a carcass surface in a direction transverse to its direction of extension; and a curved cleaning head may be made, particularly adapted to cleaning a specific, curved part of a carcass.

In another aspect, the invention relates to a combined nozzle arrangement for use in a cleaning device with the above mentioned characteristics, comprising at least one steam discharge jet and at least one suction nozzle. As mentioned above, it is advantageous to combine a number of steam discharge jets and suction nozzles into a combined nozzle arrangement for use in a cleaning device according to the invention.

According to the invention, the combined nozzle arrangement is adapted to deflect resiliently when subjected to a force in a direction substantially transversely to the direction of the suction nozzle, and/or to give way or compress resiliently when subjected to a force in or in parallel with the direction of the suction nozzle.

By these measures, similar advantages are attained as explained above with respect to the cleaning device of the invention.

At least the mouth of the suction nozzle is in the combined nozzle arrangement made from silicone rubber.

By these measures, similar advantages are attained as explained above with respect to the cleaning device of the invention.

The combined nozzle arrangement is adapted to deflect considerably more when subjected to a force in a first direction substantially transversely to the direction of the suction nozzle or suction nozzles than in a second direction substantially transverse to the direction of the suction nozzle or suction nozzles, transversely to said first direction.

This will eliminate or obviate a tendency of the combined nozzle arrangements to deflect sideways around a protrusion of the carcass surface when the cleaning device is swept over the carcass surface, instead of moving over the protrusion. In this way, it is ensured that the surface of the protrusion will be cleaned properly.

The combined nozzle arrangement comprises at least six steam discharge jets and one central suction nozzle.

It is preferred as well that the combined nozzle arrangement constitutes a portion of hose with the suction nozzle arranged substantially centrally as the lumen of the hose and the steam discharge jet or jets arranged in a wall portion of the hose.

Further, it is preferred that the combined nozzle arrangement is made from a hose with a uniform cross section along its length, and that the suction nozzle and the steam discharge jet or jets are provided by cutting off the hose at a desired length.

By these measures, a very simple and cost-efficient nozzle arrangement is obtained, as nozzle arrangements may be manufactured by simply cutting the hose described into suitable lengths.

In a particular embodiment of the combined nozzle arrangement, the suction nozzles may have additional openings or cut-outs arranged at or near the nozzle for entry of ambient air into that suction nozzle.

By this measure, similar advantages are attained as explained above with respect to the cleaning device of the invention.

When the nozzle arrangements are made from lengths of a continuous hose, the cut-outs may simply be cut in the end face of the length of hose. It may well be, however, that the nozzle arrangements are more advantageously made by injection moulding, whereby finished nozzle arrangements may be produced in one moulding process, including suction nozzles, steam jets, cut-outs, and possibly means for fixing the combined nozzle arrangement to the cleaning device.

In the particular embodiment mentioned, it is preferred that at least some of the mouths of the steam discharge jets open into an end-face of the combined nozzle arrangement, between said additional openings or cut-outs.

This will provide for the steam discharge jet mouths coming in good contact with the carcass surface so that the steam will not easily escape into the suction nozzle or the surroundings, respectively, before it reaches the carcass surface. It is thus ensured that a sufficient steam supply to the surface is maintained.

Preferred embodiments of the present invention will now be explained in more detail with reference to the drawings, in which:
Fig. 1 is a schematic drawing in perspective of a cleaning device according to the invention;
Fig. 2 is a schematic cross-sectional view of a hose for the formation of a combined nozzle arrangement according to the invention;
Fig. 3 is a schematic drawing of a prototype of a hand-held cleaning device according to the invention during use;
Figs 4-6 are schematic drawings in perspective of mouth portions of combined nozzle arrangements according to the invention;
Fig. 7 is a schematic cross-sectional view of a particular embodiment of a combined nozzle arrangement according to the invention; and
Fig. 8 is a schematic drawing in perspective of an automated carcass cleaning machine comprising a cleaning device according to the invention.

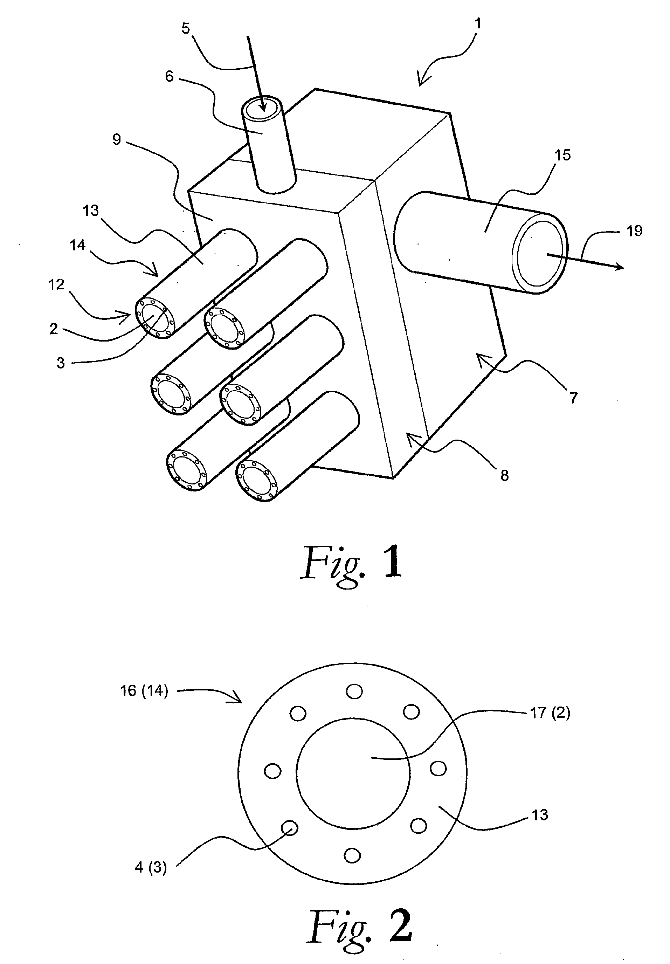

The schematic drawing of Fig. 1 illustrates a relatively simple prototype of a cleaning device 1 according to the invention. The device 1 has the form of a box having a vacuum manifold 7, which may be connected to a vacuum source (not shown) via a vacuum connector 15 and a vacuum line (not shown). Arrow 19 indicates the direction of suction air flow. The device 1 further comprises a steam manifold 8 having a steam connector 6 for a steam line (not shown), for supply of steam from a steam source (not shown). Arrow 5 indicates the direction of steam flow.

A base plate 9 of the device 1 carries six combined nozzle arrangements 14. In this embodiment, the base plate 9 is constituted by a wall of the steam manifold 8. The combined nozzle arrangements 14 are made in the form of short lengths of hose 16 having a cross section as illustrated in Fig. 2. The hose 16 thus has a wall 13 surrounding a hose lumen 17, and eight narrow, peripheral channels 4 extending in the wall 13 of the hose 16, in parallel with the lumen 17.

In Fig. 1, each combined nozzle arrangement 14 has a free end or mouth 12, which is simply constituted by the distal end of the length of hose. The nozzle arrangement mouth 12 has one central suction nozzle 2, constituted by the distal end of the hose lumen 17, and eight peripheral steam discharge jets 3, constituted by the distal ends of the steam channels 4.

Each central suction nozzle 2 (corresponding to the lumen 17 of the hose 16) is in communication with the vacuum manifold 7 via internal tubing (not shown) in the cleaning device body. All peripheral steam discharge jets 3 are in communication with the steam manifold 8.

Steam from a steam supply line (not shown in Fig. 1) enters the steam manifold 8 via the steam connector 6 as indicated by arrow 5. From the steam manifold 8, the steam flows via the steam channels 4 and exits the steam discharge jets 3, which in the embodiment shown are constituted by the ends of the steam channels 4, at the mouth 12 of each nozzle arrangement 14. The steam pressure is controlled so that a desired steam flow (or pressure or temperature) is obtained out through the steam discharge jets 3. The steam may be superheated if a higher temperature is needed or desired.

At present, it is generally preferred that the steam pressure and the vacuum are adjusted such that steam escapes into the surroundings when the cleaning device 1 is not in contact with the carcass surface, whereas there is no visible escape of steam when the device is in abutment with the carcass.

A vacuum line (not shown in Fig. 1) from a vacuum source is connected to the vacuum connector 15, which is via internal tubing (not shown) connected to each suction nozzle 2. Thus, ambient air is drawn into the suction nozzles 2 and via hose lumens 17, vacuum manifold 7 and vacuum line to an impurities collection tank or similar. The air draws excess steam, steam condensate and any impurities from the carcass surface into the suction nozzles 2 and further along to the impurities collection tank.

The treated surface is left clean and in most cases even sterilised. Further, the treated surface is left substantially dry, or at least without any additional moisture from the cleaning process.

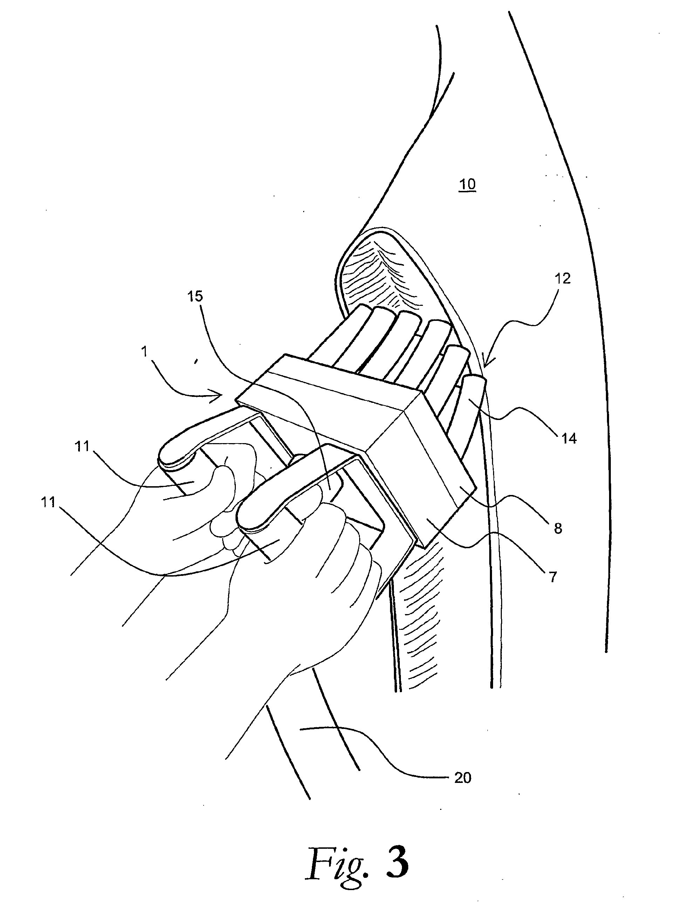

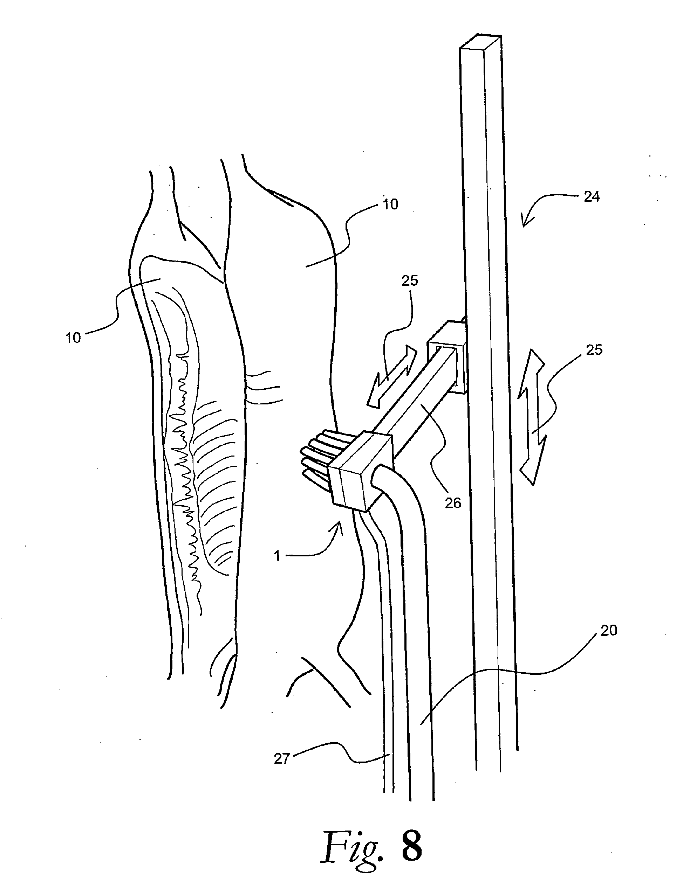

As the hose 16 is made from a flexible or highly flexible material such as silicone rubber, the combined nozzle arrangements take the form of flexible 'fingers' which may deflect when they are held or pressed against the surface of a carcass body, as shown in Figs 3 and 8.

Referring now to Fig. 3, a hand-held prototype of the cleaning device 1 is shown in use during cleaning of the inside of a pig half-carcass 10. In the embodiment shown in Fig. 3, the cleaning device 1 is adapted for manual use by an operator in that it has two handles 11. In this embodiment, the cleaning device has an array of 4 × 3 combined nozzle arrangements 14 or 'fingers', like the embodiment shown in Fig. 1.

Steam is supplied to the steam manifold 8 via a steam line (not shown) and further on to the steam discharge jets in the hose walls at the combined nozzle arrangement mouths 12.

Vacuum is applied to the vacuum manifold 7 from a vacuum line 20 via a vacuum connector 15. Corresponding suction air is drawn into the suction nozzles 2 from the carcass surface environment at the mouths 12 of the combined nozzle arrangements 14.

In the use shown in Fig. 3, the cleaning device 1 is thus held with its combined nozzle arrangement mouths 12 against the carcass surface to be cleaned, and is preferably swept across the surface in order to subject a desired surface area to the cleaning treatment. During sweeping, the device 1 is pressed against the surface with suitable, but not excessive force so that the combined nozzle arrangements 14 or 'fingers' abutting high or raised areas of carcass surface are deformed or deflected to a certain degree as it appears from Fig. 3. This will ensure that the fingers opposite retracted or hollow areas of carcass surface will be able to reach and abut these areas by not being deformed, or being deformed to a smaller degree.

In this respect, the cleaning device 1 works in a similar manner as a brush or a broom.

Steam escaping at a desired, suitable pressure and temperature from the steam discharge jets 3 hits the carcass surface where it loosens and dissolves impurities, etc., and also sterilises the surface to a certain degree. The air entering the suction nozzles 2 at a flow rate corresponding to i.a. the level of vacuum in the vacuum manifold 7, draws the loosened and/or dissolved impurities, etc., into the suction nozzles 2, from where they are transported via the vacuum line 20 to an impurities collection tank or similar. Steam, condensate and any excess moisture is drawn in as well.

In this way, it is ensured that every portion of carcass surface swept over by the nozzle arrangement mouths 12 will be thoroughly cleaned and disinfected.

Alternatively to a comparatively small, plane, rectangular base plate 9 as in the cleaning devices 1 illustrated in Figs 1 and 3, the base plate 9 may be curved and/or sized to match desired parts of a carcass to be cleaned, for example convex for cleaning the inside of a carcass, such as at the pelvic region, or concave to match a convex outer surface of e.g. a ham.

Hose-type steam discharge jets were tested in a prototype of the cleaning device of the invention. For the prototype, a hose 16 made by extrusion from a silicone rubber of VMQ-type sold as "Biosil 31399" by the company Asicomo was used for making the combined nozzle arrangements 14. This particular type of silicone rubber is transparent, peroxide-cured and food-contact approved, and has a standard-hardness of 60° ± 5° Shore A.

The hose 16 was circular in cross-section with an outer diameter of approximately 21 mm, and a central lumen 17 having an internal diameter of approximately 13 mm. In the wall of the hose, eight peripheral steam channels 4 having an internal diameter of approximately 1.5 mm were provided. The steam channels 4 were spaced equally apart across the entire perimeter of the hose wall, as seen in cross section.

The hose 16 was cut into lengths of approximately 70 mm, which were used as combined nozzle arrangements 14. The combined nozzle arrangements 14 were mounted on the base plate 9 of a cleaning device 1 in such a way that the lumen 17 of each hose was connected to the vacuum manifold 7 via internal tubing, and all steam channels 4 were connected to the steam manifold 8 in the cleaning device 1.

Fig. 2 is a schematic view, not to scale, of the above-mentioned type of hose 16, and thus at the same time illustrating the structure of the embodiment of the combined nozzle arrangements just mentioned. This hose 16 has a lumen 17 surrounded by a hose wall 13, and eight peripheral steam channels 4 embedded into the hose wall. The corresponding, combined nozzle arrangement 14 comprises a central suction nozzle 2, constituted by the distal end of the length of hose and surrounded by the hose wall 13. Further, the combined nozzle arrangement 14 has in this embodiment eight steam discharge jets 3, constituted by the openings of the peripheral steam channels 4 where the hose 16 has been cut.

This particular, circular embodiment of the nozzle arrangement 14 is only one possible form of nozzle arrangement. Particular cross-sectional shapes of combined nozzle arrangements may be advantageous for use in cleaning devices 1 for particular cleaning purposes. For example, if the cleaning device 1 is only to be swept across the carcass surface in one direction, it may be advantageous to provide the combined nozzle arrangements 14 with an oval or D-shaped cross section, in order that the flexibility of the nozzle arrangements may be increased in the direction in question while maintaining a maximum cross-sectional area of the suction nozzle 2.

In addition, the mouth of the combined nozzle arrangements 14 may be cut off at a sloping angle rather than at right angles as shown in the drawing figures, for use for particular purposes.

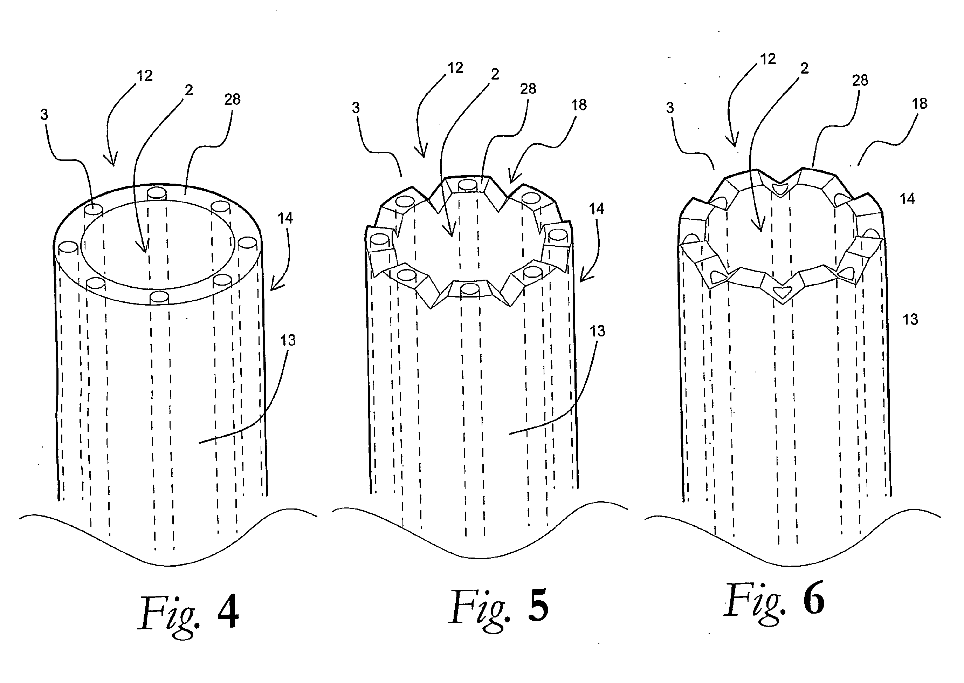

With reference to Figs 4 to 6, the mouth of the combined nozzle arrangement 14 may be provided with openings or cut-outs 18 for entry of ambient air.

Fig. 4 shows the distal portion of a combined nozzle arrangement 14 of the embodiment described above and shown in Figs 1-3. It is evident that if the mouth 12 of this nozzle arrangement abuts a plane surface along its entire circumference, both the steam discharge jets 3 and the suction nozzle 2 may become blocked. Even if this situation may not happen very often during practical use, the consequences may be that a corresponding portion of carcass surface will not receive sufficient steam and will not have impurities, etc., removed to a satisfactory extent.

In particular, the air flow into the suction nozzle 2 may be choked so much that it is insufficient to carry away the impurities, etc., collected from the carcass surface, and this may lead to re-contamination of cleaned areas of carcass surface.

In Fig. 5, eight V-shaped cut-outs 18 have been made in the end face 28 of the hose wall 13, in-between the steam discharge jets 3. During use, air will enter from the carcass surface environment into the suction nozzle 2 via the cut-outs 18 and keep the air flow into the nozzle above a certain minimum level. In the embodiment in Fig. 5, there is still the risk of the steam discharge jets 3 being choked if the combined nozzle arrangement 14 is brought into complete abutment with a plane carcass surface, and this may block the steam discharge jets 3, depending on the steam pressure and the abutment force.

In Fig. 6, eight similar V-shaped cut-outs 18 have been made in the end face 28 of the hose wall 13, but coinciding with the steam discharge jets 3. That is, the steam discharge jets 3 open into the cut-outs 18. This will ensure that steam will always discharge from the steam discharge jets 3, irrespective of the abutment of the combined nozzle arrangement 14 on the carcass surface, and the air flow into the suction nozzle 2 is maintained in the same way as explained with reference to Fig. 5.

Experiments have however shown that the reduction in microbiological contamination is better using the combined nozzle arrangement 14 in Fig. 5 than the one in Fig. 6. This is believed to be due to the fact that in Fig. 6, the steam discharge jets 3 open at a distance from the carcass surface so that the steam is not directed onto the carcass surface as efficiently as in the embodiment in Fig. 5.

Also, in the embodiment in Fig. 6, the flow resistance from the steam discharge jets 3 into the suction nozzle 2 is very small, and it is believed that this will tend to make the steam treatment less efficient because too much steam will escape from the steam discharge jets 3 directly into the suction nozzle 2 without reaching the carcass surface.

In all the embodiments of Figs 2 and 4-6, it may according to the invention be advantageous to cut or chamfer the cut-outs 18 and/or the end face of the hose wall 13 in such a way that the steam discharged from the steam discharge jets 3 will meet less resistance when discharging into the space outside the hose wall 13 than when discharging into the lumen 17 of the hose, that is, into the suction nozzle 2. The vacuum in the suction nozzle 2 may tend to draw so much of the discharged steam into the suction nozzle 2 that only a too small fraction of the steam will eventually reach the carcass surface. If this situation arises, it may be advantageous to choke the flow path leading directly from the steam discharge jets 3 to the suction nozzle 2. This may be done by appropriate chamfering or cutting of the cut-outs 18, and the skilled person will be able to perform appropriate experiments for determining the details in this respect on the background of the explanations in the present disclosure.

Experiments have further shown that combined nozzle arrangements or 'fingers' 14 having a generally circular cross section like the ones shown Figs 1-6 may have a disadvantageous tendency to deflect sideways relative to the direction of sweep of the cleaning device 1 across the carcass surface. That is, if the cleaning device 1 is swept across a high (protruding) point of the carcass surface, the combined nozzle arrangements 14 or 'fingers' may tend to deflect sideways and thus move around the high point instead of over it. In this case, the high point of carcass surface may not be subjected to the desired degree of cleaning.

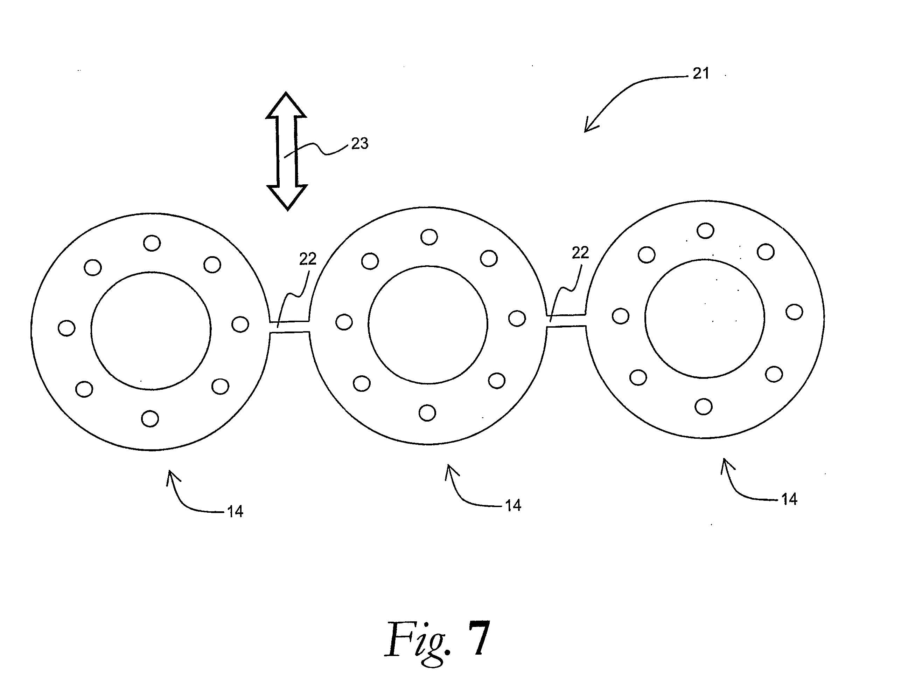

In order to obviate this tendency of the fingers to deflect sideways, fingers having oval or D-shaped cross section may be used. Alternatively, the embodiment shown in Fig. 7 of a combined nozzle arrangement 21 may be used. In the latter embodiment, a number of combined nozzle arrangements 14 of the type explained above and illustrated in Fig. 2 have been interconnected by means of flexible walls 22, thus forming the combined nozzle arrangement 21 having three suction nozzles 2 and 24 steam discharge jets 3. The combined nozzle arrangement 21 has an intended direction of sweep as indicated by arrow 23. The interconnections 22 will not influence the ability of the 'fingers' 14 to deflect in the direction 23 of sweep, while they will reduce very markedly the ability of the fingers 14 to deflect transversely to the direction 23 of sweep. Hereby, the tendency of the fingers 14 of the combined nozzle arrangement 21 to deflect sideways around a protruding carcass surface part may be eliminated to a satisfactory degree. This configuration of the combined nozzle arrangement 21 will also lend itself well to being manufactured by extrusion.

The interconnections 22 will however reduce the ability of each finger 14 of the combined nozzle arrangement 21 to deflect independently of the other fingers 14 of the combined nozzle arrangement 21 in the direction 23 of sweep.

It is believed that a compromise between the disadvantages mentioned above may be achieved by varying the thickness of the interconnections 22, by removing the interconnections 22 from distal portions of the fingers 14 or by other variations of the mechanical characteristics of the interconnections 22.

In general, good results have been achieved using saturated steam at a pressure of 1 to 2 bar, measured at the beginning of a flexible steam supply line (27), that is, one or two metres from the cleaning device 1, and a suction vacuum of 0.2 to 0.3 bar, measured in the impurities collection tank, which may be connected to the cleaning device 1 via 10 to 15 metres of piping.

Two tests have been carried out with different configurations of the combined nozzle arrangements 14 made from the hose having the cross section illustrated in Fig. 2, and with different operational variables, as outlined in the following table:

| | Test 1 | Test 2 |
|---|---|---|
| Combined nozzle arrangements ("fingers") | Chamfered and serrated ends. Steam channels end at the bottom of the serrations. Diameter of steam channels approximately 1 mm. | Straightly cut and serrated ends. Steam channels end at the bottom of the serrations. Diameter of steam channels approximately 1.5 mm. |
| Steam pressure | 1.0 Bar | 1.5 Bar |
| Suction vacuum | Vacuum adjusted such that steam escapes into the surroundings when the device is not in contact with the carcass, whereas there is no escape of steam when the device is in abutment with the carcass. | Vacuum adjusted such that steam escapes into the surroundings when the device is not in contact with the carcass, whereas there is no escape of steam when the device is in abutment with the carcass. |
| Estimated consumption of water and energy | 5.1 l water/carcass | 3.0 l water/carcass |
| | 3.9 kWh/carcass | 2.2 kWh/carcass |

Both tests showed good results in reduction of bacteria.

Fig. 8 shows an experimental prototype of an automated cleaning machine for cleaning an outer surface portion of a pig half-carcass 10. In the figure, two pig half-carcasses 10 are hanging from a gambrel (not shown). An experimental robot 24 having at least two directions 25 of linear movement is mounted near the station where the carcass is hanging, and a cleaning device 1 according to the invention has been mounted on the robot's arm 26. A steam supply line 27 and a vacuum line 20 have been connected to the cleaning device 1.

The robot 24 is now able to sweep the cleaning device 1 across the outer surface of the near half-carcass 10 in at least the two directions 25, and a third direction may be added without any difficulty. Experiments have shown very satisfactory results from this prototype automated cleaning machine.

Although the illustrated and described embodiments of the cleaning device 1 of the invention are all relatively small, the skilled person will understand from the present disclosure that the size and shape of the cleaning device may be varied according to various needs. For example, the cleaning device may be sized to cover the outer surface of a half-carcass, preferably in one dimension thereof for being swept or 'scanned' across the carcass half along another dimension. In that case the cleaning device may clean the outer surface of a complete carcass half by simply sweeping the cleaning device once along the outer surface of the carcass half.

Suitable values for the flexibility or resiliency and length of the nozzle arrangements may depend on the particular use and they may be established without undue effort by the skilled person by experiment. The skilled person will realise that the flexibility of the nozzle should be chosen between the extremes of a very flexible and a very rigid embodiment.

The very flexible embodiment increases the risk that the nozzles will deflect to a degree in which the cleaning and decontamination rendered by the steam discharge jet is ineffective as the mouth of the nozzle arrangement will disengages the surface to be cleaned, in particular at projecting parts of the surface. On the other hand, a very rigid embodiment increases the risk that the nozzles will not adapt to the surface to be cleaned, so that only projecting or non-concave portions of the surface will become in appropriate engagement with the nozzle arrangements.

It will further be possible for the skilled person to vary the size, number and distribution of nozzle arrangements to provide the best results for any particular application of the cleaning device of the present invention.

### List of Reference Designations

- 1: cleaning device
- 2: suction nozzle
- 3: steam discharge jet
- 4: peripheral steam channel
- 5: steam flow direction
- 6: steam connector
- 7: vacuum manifold
- 8: steam manifold
- 9: base plate
- 10: carcass
- 11: handle
- 12: mouth of combined nozzle arrangement
- 13: hose wall
- 14: combined nozzle arrangement
- 15: vacuum connector
- 16: hose
- 17: hose lumen
- 18: cut-out
- 19: suction air flow direction
- 20: vacuum line
- 21: combined nozzle arrangement
- 22: flexible wall
- 23: direction of sweep
- 24: robot
- 25: directions of movement
- 26: robot arm
- 27: steam supply line
- 28: hose wall end face

## Claims

1. A cleaning device (1) for cleaning a surface of a carcass by contact, the cleaning device (1) comprising a plurality of steam discharge jets (3) for discharging steam onto said surface and a plurality of suction nozzles (2) for drawing in impurities, steam and condensate from the surface, the suction nozzles being adapted to following an uneven surface of the carcass (10) and
at least some of the suction nozzles (2) are adapted to deflect resiliently when pressed against or swept across said carcass surface **characterised in that**
at least some of the suction nozzles (2) comprise additional openings or cut-outs (18) for entry of ambient air arranged at or near a mouth of the suction nozzle (2).

2. A cleaning device (1) according to claim 1, wherein at least a carcass-contacting mouth portion of at least some of the suction nozzles (2) is made from a flexible material, preferably silicone rubber.

3. A cleaning device (1) according to any of claims 1 to 2, wherein a number of steam discharge jets (3) and suction nozzles (2) are integrated into a combined nozzle arrangement (14).

4. A cleaning device (1) according to claim 3, comprising a plurality of said combined nozzle arrangements (14).

5. A combined nozzle arrangement for use in a cleaning device according to claim 3 or 4, the nozzle arrangement (14) comprising at least one steam discharge jet (3) and at least one suction nozzle (2), the combined nozzle arrangement (14) being adapted to deflect resiliently when subjected to a force in a direction substantially transversely to the direction of the suction nozzle (2) or suction nozzles (2)
the combined nozzle arrangement (14) further being adapted to give way or compress resiliently when subjected to a force in or in parallel with the direction of the suction nozzle (2) or suction nozzles (2) **characterised in that**
the mouth of the suction nozzle (2) or suction nozzles (2) is made from silicone rubber,
being adapted to deflect considerably more when subjected to a force in a first direction substantially transversely to the direction of the suction nozzle (2) or suction nozzles (2) than in a second direction substantially transversely to the direction of the suction nozzle (2) or suction nozzles (2), transverse to said first direction where the nozzle arrangement (14) comprises one central suction nozzle (2) and at least six steam discharge jets (3).

6. A combined nozzle arrangement (14) according to claim 5, wherein the combined nozzle arrangement (14) constitutes a portion of hose (16) with the suction nozzle (2) arranged substantially centrally as the lumen of the hose (17) and the steam discharge jet (3) or jets (3) arranged in a wall portion of the hose (16).

7. A combined nozzle arrangement (14) according to claim 6, wherein the combined nozzle arrangement (14) is made from a hose (16) with a uniform cross section along its length, and where the suction nozzle (2) and the steam discharge jet (3) or jets (3) are provided by cutting off the hose (16) at a desired length.

8. A combined nozzle arrangement (14) according to any of claims 5 to 7, wherein at least some of the suction nozzles (2) have additional openings or cut-outs (18) arranged at or near the suction nozzle (2) for entry of ambient air into that suction nozzle (2).

9. A combined nozzle arrangement (14) according to claim 8, wherein at least some of the mouths of the steam discharge jets (2) open into an end-face of the combined nozzle arrangement (14), between said additional openings or cut-outs (18).

## Patentansprüche

1. Reinigungseinrichtung (1) zum Reinigen einer Oberfläche eines Schlachtkörpers durch Kontakt, wobei die Reinigungseinrichtung (1) eine Mehrzahl Dampfausstoßdüsen (3) zum Ausstoßen von Dampf auf die Oberfläche und eine Mehrzahl Saugdüsen (2) zum Einsaugen von Verunreinigungen, Dampf und Kondensat von der Oberfläche umfasst, wobei die Saugdüsen eingerichtet sind, um einer unebenen Oberfläche des Schlachttierkörpers (10) zu folgen, und
wobei mindestens einige der Saugdüsen (2) eingerichtet sind, um federnd ausgelenkt zu werden, wenn sie gegen die Schlachtkörperoberfläche gedrückt werden oder über sie streichen, **dadurch gekennzeichnet, dass**
mindestens einige der Saugdüsen (2) zusätzliche Öffnungen oder Aussparungen (18) zum Eintritt von Außenluft umfassen, die an oder nahe bei einer Mündung der Saugdüse (2) angeordnet sind.

2. Reinigungseinrichtung (1) nach Anspruch 1, wobei mindestens ein den Schlachtkörper kontaktierender Mündungsabschnitt mindestens einiger der Saugdüsen (2) aus einem flexiblen Material hergestellt ist, vorzugsweise Silikongummi.

3. Reinigungseinrichtung (1) nach einem der Ansprüche 1 oder 2, wobei eine Anzahl Dampfausstoßdüsen (3) und Saugdüsen (2) in einer kombinierten Düsenanordnung (14) eingebunden sind.

4. Reinigungseinrichtung (1) nach Anspruch 3, umfassend eine Mehrzahl der kombinierten Düsenanordnungen (14).

5. Kombinierte Düsenanordnung zur Verwendung in einer Reinigungseinrichtung nach Anspruch 3 oder 4, wobei die Düsenanordnung (14) mindestens eine Dampfausstoßdüse (3) und mindestens eine Saugdüse (2) umfasst, wobei die kombinierte Düsenanordnung (14) so eingerichtet ist, dass sie federnd ausgelenkt wird, wenn sie einer Kraft in einer Richtung im Wesentlichen quer zur Richtung der Saugdüse (2) oder Saugdüsen (2) ausgesetzt ist,
wobei die kombinierte Düsenanordnung (14) weiterhin eingerichtet ist, um federnd nachzugeben oder sich zusammenzuziehen, wenn sie einer Kraft in Richtung oder parallel zur Richtung der Saugdüse (2) oder Saugdüsen (2) ausgesetzt ist, **dadurch gekennzeichnet, dass**
die Mündung der Saugdüse (2) oder Saugdüsen (2) aus Silikongummi hergestellt ist,
und eingerichtet ist, um deutlich mehr ausgelenkt zu werden, wenn sie einer Kraft in einer ersten Richtung im Wesentlichen quer zur Richtung der Saugdüse (2) oder Saugdüsen (2) als in einer zweiten Richtung im Wesentlichen quer zur Richtung der Saugdüse (2) oder Saugdüsen (2), quer zur ersten Richtung, ausgesetzt ist, wobei die Düsenanordnung (14) eine mittig gelegene Saugdüse (2) und mindestens sechs Dampfausstoßdüsen (3) umfasst.

6. Kombinierte Düsenanordnung (14) nach Anspruch 5, wobei die kombinierte Düsenanordnung (14) einen Schlauchabschnitt (16) bildet, wobei die Saugdüse (2) im Wesentlichen mittig als das Lumen des Schlauchs (17) angeordnet ist und die Dampfausstoßdüse (3) oder -düsen (3) in einem Wandabschnitt des Schlauchs (16) angeordnet sind.

7. Kombinierte Düsenanordnung (14) nach Anspruch 6, wobei die kombinierte Düsenanordnung (14) aus einem Schlauch (16) mit einem gleichförmigen Querschnitt entlang seiner Länge hergestellt ist, und wobei die Saugdüse (2) und die Dampfausstoßdüse (3) oder -düsen (3) durch Abschneiden des Schlauchs (16) an einer gewünschten Länge vorgesehen werden.

8. Kombinierte Düsenanordnung (14) nach einem der Ansprüche 5 bis 7, wobei mindestens einige der Saugdüsen (2) zusätzliche Öffnungen oder Aussparungen (18), die an oder nahe der Saugdüse (2) angeordnet sind, zum Eintritt von Außenluft in diese Saugdüse (2) aufweisen.

9. Kombinierte Düsenanordnung (14) nach Anspruch 8, wobei sich mindestens einige der Mündungen der Dampfausstoßdüsen (2) zwischen den zusätzlichen Öffnungen oder Aussparungen (18) in eine Endfläche der kombinierten Düsenanordnung (14) öffnen.

## Revendications

1. Dispositif de nettoyage (1) pour nettoyer une surface d'une carcasse par contact, le dispositif de nettoyage (1) comprenant une pluralité de jets de décharge de vapeur (3) pour décharger de la vapeur sur ladite surface et une pluralité de buses d'aspiration (2) pour aspirer les impuretés, la vapeur et le condensat de la surface, les buses d'aspiration étant adaptées pour suivre une surface irrégulière de la carcasse (10), et
au moins certaines des buses d'aspiration (2) sont adaptées pour dévier de manière élastique lorsqu'elles sont comprimées contre ou sont balayées sur ladite surface de carcasse, **caractérisé en ce que** :
au moins certaines des buses d'aspiration (2) comprennent des ouvertures ou découpes supplémentaires (18) pour l'entrée de l'air ambiant, agencées au niveau de ou à proximité d'une embouchure de la buse d'aspiration (2).

2. Dispositif de nettoyage (1) selon la revendication 1, dans lequel au moins une partie d'embouchure en contact avec la carcasse d'au moins certaines des buses d'aspiration (2) est réalisée à partir d'un matériau souple, de préférence du caoutchouc de silicone.

3. Dispositif de nettoyage (1) selon l'une quelconque des revendications 1 à 2, dans lequel un certain nombre de jets de décharge de vapeur (3) et de buses d'aspiration (2) sont intégrés dans un agencement combiné de buse (14).

4. Dispositif de nettoyage (1) selon la revendication 3, comprenant une pluralité desdits agencements combinés de buse (14).

5. Agencement combiné de buse destiné à être utilisé dans un dispositif de nettoyage selon la revendication 3 ou 4, l'agencement de buse (14) comprenant au moins un jet de décharge de vapeur (3) et au moins une buse d'aspiration (2), l'agencement combiné de buse (14) étant adapté pour dévier de manière élastique lorsqu'il est soumis à une force dans une direction sensiblement transversale à la direction de la buse d'aspiration (2) ou des buses d'aspiration (2),
l'agencement combiné de buse (14) étant en outre adapté pour céder ou se comprimer de manière élastique lorsqu'il est soumis à une force dans ou parallèlement à la direction de la buse d'aspiration (2) ou des buses d'aspiration (2), **caractérisé en ce que** :
l'embouchure de la buse d'aspiration (2) ou des buses d'aspiration (2) est réalisée à partir de caoutchouc de silicone,
étant adaptée pour dévier nettement plus lorsqu'elle est soumise à une force dans une première direction sensiblement transversale à la direction de la buse d'aspiration (2) ou des buses d'aspiration (2) que dans une seconde direction sensiblement transversale à la direction de la buse d'aspiration (2) ou des buses d'aspiration (2), transversale à ladite première direction, lorsque l'agencement de buse (14) comprend une buse d'aspiration centrale (2) et au moins six jets de décharge de vapeur (3).

6. Agencement combiné de buse (14) selon la revendication 5, lequel agencement combiné de buse (14) constituant une partie de tuyau flexible (16) avec la buse d'aspiration (2) agencée de manière sensiblement centrale en tant que partie creuse du tuyau flexible (17) et le jet (3) ou les jets (3) de décharge de vapeur agencé(s) dans une partie de paroi du tuyau flexible (16).

7. Agencement combiné de buse (14) selon la revendication 6, lequel agencement combiné de buse (14) étant réalisé à partir d'un tuyau flexible (16) avec une section transversale uniforme le long de sa longueur, et lorsque la buse d'aspiration (2) et le jet (3) ou les jets (3) de décharge de vapeur sont fournis en coupant le tuyau flexible (16) à une longueur souhaitée.

8. Agencement combiné de buse (14) selon l'une quelconque des revendications 5 à 7, dans lequel au moins certaines buses d'aspiration (2) ont des ouvertures ou découpes supplémentaires (18) agencées au niveau de ou à proximité de la buse d'aspiration (2) pour l'entrée de l'air ambiant dans cette buse d'aspiration (2).

9. Agencement combiné de buse (14) selon la revendication 8, dans lequel au moins certaines embouchures des jets de décharge de vapeur (2) s'ouvrent dans une face d'extrémité de l'agencement combiné de buse (14), entre lesdites ouvertures ou découpes supplémentaires (18).
